# EUROPÄISCHE PATENTSCHRIFT

(11) **EP 3 069 160 B1**
(45) Veröffentlichungstag und Bekanntmachung des Hinweises auf die Patenterteilung: **24.04.2019**
(21) Anmeldenummer: 14808827.1
(22) Anmeldetag: 04.11.2014
(51) Int. Cl.: G01S 5/02, H05B 37/02, H04M 1/22

(54) **VERFAHREN UND SYSTEM ZUR AUSGABE VON STIMULIERTEN SIGNALEN MITTELS EMPFÄNGEREINHEITEN**
METHOD AND SYSTEM FOR OUTPUTTING STIMULATED SIGNALS BY MEANS OF RECEIVER UNITS
PROCÉDÉ ET SYSTÈME PERMETTANT D'ÉMETTRE DES SIGNAUX STIMULÉS AU MOYEN D'UNITÉS DE RÉCEPTION

(30) Priorität: 13.11.2013 DE 102013018918
(43) Veröffentlichungstag der Anmeldung: 21.09.2016
(73) Patentinhaber: Deutsche Telekom AG, 53113 Bonn (DE)
(72) Erfinder: HEINZ, Sebastian, 53227 Bonn (DE); WINDHEUSER, Jörg, 40627 Düsseldorf (DE); WESTERMANN, Robin, 53229 Bonn (DE); SCHMIDT-GABRIEL, Michael, 82234 Weßling (DE); SCHWARZ, Gerd, 81543 München (DE); BEER, Andreas, 85630 Grasbrunn (DE); SCHOLL, Johannes, 80686 München (DE)
(74) Vertreter: Cohausz Hannig Borkowski Wißgott
(86) Internationale Anmeldenummer: PCT/EP2014/002943
(87) Internationale Veröffentlichungsnummer: WO 2015/070954

(56) Entgegenhaltungen:
- EP-A1- 1 870 802
- US-A1- 2003 017 823
- US-A1- 2009 201 850

## Beschreibung

Die Erfindung betrifft ein Verfahren zur Ausgabe von stimulierten Signalen, insbesondere Lichtsignalen mittels insbesondere mobiler Empfängereinheiten, die jeweils zur Ausgabe von stimulierten Signalen in Abhängigkeit einer empfangenen Nachricht eingerichtet sind, wobei wenigstens einer Triggereinheit eine Gruppe von mehreren Empfängereinheiten zumindest zeitweise zugeordnet wird, die mit der wenigstens einen Triggereinheit ein Kommunikationsnetzwerk bilden und von der wenigstens einen Triggereinheit Nachrichten (Kommunikationstelegramme, Datenpakete) an die Empfängereinheiten der zugeordneten Gruppe ausgesendet werden, mit denen die Ausgabe von Signalen, insbesondere Lichtsignalen bei den jeweiligen die Nachricht empfangenden Empfängereinheiten in Abhängigkeit der Position der jeweiligen Empfängereinheiten ausgelöst, d.h. stimuliert wird. Die Erfindung betrifft weiterhin auch ein System zur Durchführung eines solchen gattungsgemäßen Verfahrens.

Ein Verfahren und System der eingangs genannten gattungsgemäßen Art ist zum Beispiel bekannt aus der Publikation US 6,965,785 B2. Diese Publikation beschreibt die Möglichkeit, mittels einer Vielzahl in diesem Fall mobiler Empfängereinheiten, wie beispielsweise Mobiltelefonen in einer Menge von Menschen Lichterscheinungen zu erzeugen, insbesondere statische oder bewegte Bilder erscheinen zu lassen, wofür die einzelnen Empfängereinheiten von einer hier zentral angeordneten Triggereinheit Funknachrichten beispielsweise in Form von Kommunikationstelegrammen empfangen und hierdurch zur Erzeugung eines Lichtsignals aufgefordert werden in Abhängigkeit von der konkreten örtlichen Position, welche eine Empfängereinheit im Raum einnimmt.

Insbesondere eine Erkenntnis über die örtliche Position einer Empfängereinheit im Raum ist hier notwendig, um die einzelnen zu einer Lichterzeugung stimulierbaren Empfängereinheiten so ähnlich wie die einzelnen Pixel eines Bildschirmes gezielt anhand ihres Ortes ansteuern zu können und hierdurch eine konkrete bildliche Darstellung durch die Vielzahl der Empfängereinheiten zur Anzeige zu bringen.

Die vorgenannte Publikation erwähnt es, dass in diesem Zusammenhang die örtliche Position der Empfängereinheiten, wie beispielsweise der Mobiltelefone bekannt sein kann durch die Sitzplatzposition, die eine die mobile Empfängereinheit tragende Person z.B. in einem Stadion einnimmt.

In einer anderen Ausführung beschreibt dieser Stand der Technik auch die automatisierte Feststellung der Position der einzelnen Empfängereinheiten anhand von GPS Signalen, also durch Satellitennavigation.

Das feste Vorgeben einer absoluten örtlichen Position, beispielsweise anhand der Sitznummerierung in einem Stadion hat den Nachteil, dass bei einer solchen Positionszuordnung eine durch Lichterscheinung der einzelnen Empfängereinheiten zu generierende bildliche Darstellung nur dann erfolgreich erzeugt werden kann, wenn sich die einzelnen Personen, welche die mobilen Empfängereinheiten mit sich führen, nicht bewegen. In Verbindung mit sich bewegenden Menschenmengen, z.B. bei Konzerten oder sonstigen Veranstaltungen ohne Platzvergabe kann demnach das vorbeschriebene Prinzip der konkreten Positionsbestimmung durch eine Positionsvorgabe nicht verwendet werden.

Die Bestimmung der Position anhand von GPS-Signalen hat hingegen den Nachteil, dass die Genauigkeit der Ortpositionierung nur bis auf wenige Meter genau ist und nicht selbst durch das Verfahren zur bildlichen Darstellung von Lichterscheinungen beeinflussbar ist, da die Ortungsgenauigkeit des GPS-Satelliten-Navigationssystems durch die amerikanische Regierung bzw. das amerikanische Militär vorbestimmt ist.

Darüber hinaus setzt eine Ortsbestimmung anhand von GPS-Signalen voraus, dass ein freier Signalempfang der von Satelliten ausgestrahlten GPS-Signalen vorliegt, so dass im Wesentlichen nur bei Freiluftveranstaltungen das im Stand der Technik bekannte Verfahren zum Einsatz kommen kann. Darüber hinaus setzt das Verfahren voraus, dass jede Empfängereinheit eine entsprechende elektronische Infrastruktur mit sich bringen muss, um anhand von empfangenen GPS-Satellitensignalen seine eigene Ortsposition bestimmen zu können.

Es ist daher eine Aufgabe der Erfindung, ein gattungsgemäßes Verfahren bzw. System der eingangs beschriebenen Art insoweit weiterzubilden, dass sowohl in einer Menge von sich bewegenden Personen als auch bei grundsätzlich beliebigen Veranstaltungen, insbesondere auch solchen, die nicht unter freiem Himmel stattfinden, eine Generierung von Signalen, insbesondere von Lichtsignalen mit einer Vielzahl von Empfängereinheiten, bevorzugt mobilen Empfängereinheiten ermöglicht wird unter Erzielung einer hohen Zuverlässigkeit der Ortsbestimmung und einer dadurch erzielten hohen Auflösung, insbesondere bei lichtbildlichen Darstellungen.

Diese Aufgabe wird erfindungsgemäß durch ein Verfahren der eingangs genannten gattungsgemäßen Art gelöst, dass dadurch weiter gebildet wird, dass die wenigstens eine Triggereinheit mit der Gruppe der mehreren zugeordneten Empfängereinheiten ein Funk-Nahbereichskommunikationsnetzwerk bildet und durch Kommunikation zwischen den Einheiten dieses Nahbereichsnetzwerkes, insbesondere durch Kommunikation zwischen Empfängereinheiten und wenigstens einer Triggereinheit und/oder zwischen mehreren Empfängereinheiten die jeweilige örtliche Position der Empfängereinheiten der Gruppe, insbesondere relativ zu der wenigstens einen Triggereinheit ermittelt wird.

Die Begriffe Triggereinheit und Empfängereinheit werden im Rahmen der vorliegenden Beschreibung verwendet zumindest hinsichtlich der Funktion, welche das jeweilige Gerät zum Zeitpunkt der Verfahrensdurchführung vornimmt.

Es kann also auch der Fall vorliegen, dass Triggereinheit(en) und Empfängereinheiten(en) identische Geräte sind, die hinsichtlich Ihrer Funktionalität umschaltbar sind, z.B. durch den Benutzer/Träger des Gerätes oder auch durch eine übergeordnete Instanz, z.B. die nachfolgend noch beschriebene zentrale Kommunikationseinheit. Auch kann die Erfindung vorsehen, während der Verfahrensdurchführung die Funktion eines solchen Gerätes festzulegen, z.B. in Abhängigkeit der Anzahl an vorhandenen Geräten auf einer definierten Fläche oder durch eine Aktivität eines Gerätenutzers, der durch diese Aktivität die Funktion seines Gerätes festlegt.

Auch in dem Fall, dass es sich um unterschiedliche Geräte handelt kann es die Erfindung vorsehen, dass eine Triggereinheit auch die Funktion einer Empfängereinheit aufweisen kann und/oder dass eine Empfängereinheit auch die Funktion einer Triggereinheit aufweisen kann.

Geräte die beide Funktionen aufweisen, haben bevorzugt Kommunikationsschnittstellen zur Einbindung in ein Weitbereichsnetzwerk und in ein Nahbereichsnetzwerk, also z.B. eine Schnittstelle nach dem Standard TCP/IP, GSM, GPRS, HSDPA, UMTS, LTE zur Einbindung in ein kabelgebundenes oder auch mobilfunkbasiertes Weitbereichsnetzwerk und z.B. eine Schnittstelle nach dem Standard Bluetooth, RFID, WLAN zur Einbindung in ein funkbasiertes Nahbereichsnetzwerk.

Unter einem Nahbereichskommunikationsnetzwerk wird im vorliegenden Fall ein solches Kommunikationsnetzwerk verstanden, dass zwischen den einzelnen Einheiten dieses Netzwerkes Kommunikationsreichweiten < 1000 Meter, bevorzugt < 100 Meter erzielt. Solche Nahbereichskommunikationsnetzwerke können zum Beispiel nach dem WLAN-Standard, nach dem Bluetooth Standard, insbesondere dem neuen Low-Energy-Bluetooth-Standard, sowie auch ggf. durch Transponder gebundene Nahfeldkommunikation erzielt werden. In jedem Fall nutzt die Erfindung funkbasierte Kommunikation in diesem Nahbereichskommunikationsnetzwerk.

Das erfindungsgemäße Verfahren wählt vorliegend den Ansatz, eine Ortsbestimmung der einzelnen Empfängereinheiten aus sich selbst heraus, d.h. aus den Einheiten des Nahbereichskommunikationsnetzwerkes zu ermöglichen. Hierfür sieht das erfindungsgemäße Verfahren vor, dass Kommunikationen stattfinden zwischen den einzelnen Einheiten dieses gebildeten Nahbereichsnetzwerkes, insbesondere Kommunikationen zwischen den einzelnen jeweiligen Empfängereinheiten und der wenigstens einen, bevorzugt jedoch wenigstens drei Triggereinheiten. Die Kommunikationen können z.B. nur zum Zweck der Ortsbestimmung durchgeführt werden.

Auch können Kommunikationen zwischen den Einheiten vorgesehen sein, wenn die Einheiten jeweils beide Funktionen, also Trigger- und Empfängerfunktion ausüben kommen, um im Rahmen dieser Kommunikation die jeweilige Funktionalität einer solchen Einheit festzulegen. Legt zum Beispiel ein Nutzer manuell fest, dass sein Gerät bzw. seine Einheit eine Triggerfunktionalität ausüben soll, so kann es vorgesehen sein, dass durch Kommunikation zwischen diesem Gerät und örtlich benachbarten Geräten (im Empfangsreichweite) die benachbarten Geräte automatisch die Empfangsfunktionalität auswählen, um ein Nahbereichsnetzwerk mit diesen Geräten insgesamt zu bilden.

Durch diese durchgeführten Kommunikationen, die zumindest unidirektional, in einer bevorzugten Weiterbildung auch bidirektional stattfinden können, kann beispielsweise nach dem Prinzip der Triangulation eine Ortsbestimmung der einzelnen Empfängereinheiten innerhalb des Nahbereichskommunikationsnetzwerkes und bevorzugt relativ zu einer Triggereinheit vorgenommen werden, um sodann diese Empfängereinheiten in Abhängigkeit der bekannten jeweiligen Ortsposition durch Kommunikationsnachrichten, insbesondere Telekommunikationstelegramme aufzufordern, Signale, insbesondere Lichtsignale abzugeben, insbesondere koordiniert und besonders bevorzugt synchronisiert mit anderen benachbarten Empfangseinheiten, insbesondere derselben Gruppe bzw. desselben Nahbereichsnetzwerkes.

Die Bestimmung der Position der jeweiligen Empfängereinheiten innerhalb eines jeweiligen beispielweise um eine Triggereinheit herum aufgespannten Nahbereichskommunikationsnetzwerkes kann beispielsweise und nicht abschließend durch wenigstens eine der folgenden Maßnahmen erfolgen:
1. Es kann vorgesehen sein dass die jeweiligen Empfängereinheiten die Empfangsfeldstärke von wenigstens drei Funksignalen insbesondere wenigstens drei Kommunikationstelegrammen bestimmen, die sie von wenigstens drei verschiedenen Einheiten des Nahbereichskommunikationsnetzwerkes erhalten haben, insbesondere von drei verschiedenen Triggereinheiten oder aber auch anderen Empfängereinheiten, die zumindest für diesen Fall auch eine Sendefähigkeit aufweisen, wobei zumindest die relative Position der drei verschiedenen Einheiten zu einander bekannt ist und wobei sodann durch Triangulation anhand der wenigstens drei Empfangsfeldstärkewerte die Position einer jeweiligen Empfängereinheit relativ zu wenigstens einer der Einheiten, insbesondere zu einer Triggereinheit bestimmt wird.
   Hier kann es die Erfindung demnach vorsehen, dass die Position einer jeweiligen Empfängereinheit durch die Empfängereinheit selbst bestimmt wird und beispielsweise eine ermittelte Position innerhalb der jeweiligen Empfängereinheit gespeichert wird oder aber auch an eine Triggereinheit des Nahbereichskommunikationsnetzwerkes übermittelt wird insbesondere in Verbindung mit einer Identifikation der jeweiligen Empfängereinheit, wie beispielsweise einer Kommunikationsadresse welche die Empfängereinheit innerhalb des Nahbereichskommunikationsnetzwerkes aufweist. So kann eine Triggereinheit sodann eine Zuordnungsliste umfassen, in der die Orte und die Netzwerkadressen der Empfängereinheiten einander zugeordnet sind.
2. Eine andere Alternative kann es beispielsweise vorsehen, die Laufzeit insbesondere die summierte Zeit aus Hin- und Rücklaufzeit eines Funksignals, insbesondere eines Kommunikationstelegrammes zwischen einer jeweiligen Empfängereinheit und wenigstens drei verschiedenen Einheiten, insbesondere wenigstens drei verschiedenen Triggereinheiten zu bestimmen, wobei zumindest die relative Position der drei verschiedenen Einheiten zueinander bekannt ist und durch Triangulation anhand der wenigstens drei Laufzeitwerte die Position einer jeweiligen Empfängereinheit relativ zu wenigstens einer der verschiedenen Einheiten bestimmt wird, insbesondere relativ zu einer Triggereinheit.
   Hier kann es die Erfindung demnach vorsehen, dass von einer Triggereinheit ein Funksignal, d.h. beispielsweise ein Kommunikationstelegramm ausgesandt wird, von einer bzw. mehreren Empfängereinheiten empfangen wird und nach Empfang ein Zurücksenden des empfangenen Kommunikationstelegrammes an die aussendende Triggereinheit erfolgt, wobei über diese Hin- und Rücksendung die Laufzeit des Funktelegrammes bestimmt wird, beispielsweise anhand des Vergleiches eines Uhrenstandes in der aussendenden Triggereinheit zum Zeitpunkt der Aussendung und zum Zeitpunkt des Empfangs des zurückgesendeten Kommunikationstelegrammes.
   Hier kann die Erfindung demnach vorsehen, dass die Bestimmung der Ortsposition einer jeweiligen Empfängereinheit durch eine Triggereinheit vorgenommen wird welcher zumindest die Laufzeitinformationen von wenigstens zwei weiteren Triggereinheiten zur Verfügung gestellt werden.
   Es kann sodann in dieser Triggereinheit, die z.B. den Ursprung eines Koordinatensystems bilden kann, relativ zu welchem die Ortsbestimmung der jeweiligen Empfängereinheiten stattfindet, die Ortsinformation einer jeweiligen Empfängereinheit gespeichert werden, beispielsweise in Zuordnung zu einer Kommunikationsadresse die die jeweilige Empfängereinheit in dem Nahbereichskommunikationsnetzwerk aufweist, so wie es auch zur vorherigen Ausführung beschrieben ist.
3. Eine wiederum weitere Ausführung kann es vorsehen, dass alle Empfängereinheiten insbesondere periodisch Funksignale, insbesondere als Kommunikationstelegramme versenden, die bevorzugt gleiche Sendeleistung aufweisen und mittels wenigstens drei verschiedenen Einheiten, insbesondere Triggereinheiten zu denen zumindest die relative Position zueinander bekannt ist, die Empfangsfeldstärken dieser Funksignale ermittelt werden und sodann durch Triangulation anhand der wenigstens drei Empfangsfeldstärkewerte die Position der jeweiligen Empfängereinheit relativ zu wenigstens einer der verschiedenen Einheiten bestimmt wird, insbesondere zu einer Triggereinheit
   Auch hier kann demnach die Ortsbestimmung der einzelnen Empfängereinheiten in wenigstens einer der Triggereinheiten stattfinden, wofür dieser Triggereinheit die Empfangsfeldstärkewerte der anderen Triggereinheiten durch Kommunikation innerhalb des Nahbereichsnetzwerkes zur Verfügung gestellt werden.

Bei den vorbeschriebenen Methoden zur Ortsbestimmung braucht beispielsweise nur eine der Einheiten, insbesondere nur eine von ggfs. mehreren, insbesondere von wenigstens drei Triggereinheit eine Infrastruktur zur Durchführung von Rechenoperationen aufweisen, um die Triangulationsoperationen durchführen zu können.

Wesentlich ist es bei diesem Triangulationsprinzip, dass bei den hierfür eingesetzten Triggereinheiten während der Verfahrensdurchführung zumindest die relativen Abstände der Triggereinheiten untereinander bekannt sind, um relativ zumindest zu einer der Triggereinheiten ein Koordinatensystem zu erzeugen. Dabei können die Triggereinheiten z.B. ortsfest sein. Es kann aber auch vorgesehen sein, dass die Triggereinheiten beweglich sind und hierdurch ein ebenso bewegliches Koordinatensystem ermöglichen, also dessen Ursprung ortsvariabel sein kann. Durch wiederholende Ortsbestimmung, z.B. durch die beschriebene Triangulation kann jeweils im Zyklustakt der Wiederholung die jeweilige Ortsposition der Empfängereinheiten im Nahbereichsnetzwerk relativ zum variablen Ursprung neu festgestellt werden.

Im Rahmen der Erfindung sind auch grundsätzlich weitere Kommunikationsprinzipien denkbar, mit denen alleine unter den verschiedenen Einheiten des Nahbereichskommunikationsnetzwerkes, dass zumindest um eine Triggereinheit herum mit einer Anzahl von mehreren Empfängereinheiten ausgebildet wird, eine Bestimmung der Ortsposition jeder einzelnen Empfängereinheit vorgenommen werden, zumindest dann, wenn bei Einsatz von Triangulationsalgorithmen die relative Position von zumindest drei Einheiten und bevorzugt drei Triggereinheiten bekannt sind.

Bei den vorbeschriebenen Verfahrensvarianten, die auf einer Laufzeitmessung eines hin- und rücklaufenden Telekommunikationstelegrammes basieren kann es in alternativer Ausführung auch vorgesehen sein, statt einer Laufzeitmessung eine Phasenverschiebung auszumessen zwischen den Phasenlagen eines ausgesandten modulierten Signales und des zurückgesendeten empfangenen Signales, zumindest dann, wenn die Verarbeitungszeit für das Empfangen und Zurücksenden des Signales bei einer Einheit, insbesondere einer Empfängereinheit bekannt oder zumindest konstant ist, um diesen Wert bei der Beurteilung der Phasenverschiebung berücksichtigen zu können. Ein auf Phasenverschiebung beruhendes Prinzip kann besonders dann zum Einsatz kommen, wenn die Laufzeiten aufgrund sehr kurzer Signalwege im Nahbereichskommunikationsnetzwerk ansonsten sehr klein sind.

Die eingangs beschriebenen Positionsbestimmungsmechanismen setzen im Wesentlichen voraus bzw. machen sich zu Nutze, dass die Position der einzelnen Empfängereinheiten relativ zu zumindest einer Triggereinheit bestimmt werden, somit also um eine Triggereinheit als Ursprung im Wesentlichen ein Koordinatensystem aufgespannt wird.

Die Erfindung kann es hier in einer Weiterbildung vorsehen, dass eine relativ zu einer ortsfesten Einheit, insbesondere relativ zu einer Triggereinheit bestimmte Ortsposition einer jeweiligen Empfängereinheit einer Rastereinheit zugeordnet wird, von einem in ein Raster unterteilten Koordinatensystem, insbesondere von einem in wenigstens zwei Dimensionen gerastertem Koordinatensystem.

Hierdurch kann berücksichtig werden, dass Signalisierungen, beispielsweise Lichtsignalisierungen und insbesondere bildliche Darstellung üblicherweise mit einer vorgegebenen Auflösung, somit also in einem der Auflösung gleich kommenden Raster programmiert werden und demnach eine Unterteilung der einzelnen Empfängereinheiten in verschiedene Ortspositionen mit einer höheren Auflösung als das programmierte Raster keinen Vorteil bildet, so dass demnach solche Ortspositionen von verschiedenen Empfängereinheiten, die innerhalb derselben Rastereinheit liegen durch Zuordnung zu der Rastereinheit zu einer einzigen gemeinsamen Ortsposition vereinheitlicht werden können.

Es besteht demnach auch die Möglichkeit mehrere Empfängereinheiten innerhalb einer solchen Rastereinheit gemeinsam anzusprechen und zu einer Signalisierung zu stimulieren.

Um weiterhin zu berücksichtigen, dass besonders bei nicht sitzenden Menschen einer größeren Menge sich die einzelnen Menschen zueinander auch bewegen, oder auch sich eine Menschenmenge insgesamt bewegt, sich hierdurch demnach die einzelnen Ortspositionen der mitgeführten mobilen Empfängereinheiten im Wesentlichen ständig oder zumindest situationsbedingt verändern, kann eine Weiterbildung vorsehen, dass die Positionsbestimmung in zeitlichen Abständen wiederholt durchgeführt wird. Beispielsweise können hierfür Pausen in Kommunikationen, mit denen ansonsten die Stimulation von Signalen erfolgt genutzt werden.

Eine wiederholende Positionsbestimmung kann z.B. zyklisch mit einer vorgegebenen Periodizität vorgenommen werden.

Beispielsweise kann hierdurch auch eine Verfahrensvariante realisiert werden, bei der durch wenigstens drei, bevorzugt ortsfeste Triggereinheiten ein Koordinatensystem insbesondere einer vorbestimmten Abmessung, aufgebaut wird, in welchen anfänglich keine oder nur einige Empfängereinheiten anwesend sind und mit der Zeit weitere Empfängereinheiten in den Ortsbereich dieses Koordinatensystems eintreten. Durch die fortwährende Positionsbestimmung von Empfängereinheiten, werden diese nach Eintritt in den gültigen Koordinatenbereich des Koordinatensystems automatisch in die Visualisierung mit eingebunden, die in diesem Koordinatensystem erfolgen soll. So kann eine Menschenmenge gebildet werden, die durch ein ortsfest programmiertes latentes und zu visualisierende Bild nichtdurchläuft und beim Hindurchlaufen zum Display wird mit dem mitgetragenen Empfängereinheiten.

Sowohl bei der ursprünglichen Ortsbestimmung, also auch bei evtl. später folgenden Neubestimmungen der Orte kann es vorgesehen sein, dass die jeweilige Ortsposition oder Rastereinheitenzuordnung in einer jeweiligen Empfängereinheiten selbst gespeichert ist, also die Empfängereinheit ihre Position kennt, und empfangene Nachrichten, die zur Erzeugung von Signalen auffordern intern anhand der eigenen Kenntnis der Position auswertet. Ebenso können die Positionen bzw. Rasterzuordnung aller Empfängereinheiten an eine Triggereinheit übermittelt werden, so dass eine Triggereinheit Nachrichten zur Auslösung von Signalen nur an solche Empfängereinheiten versendet, die durch die benötigte Ortsposition bzw. Rastereinheit identifiziert sind.

Das erfindungsgemäße Verfahren kann bevorzugt weiterhin vorsehen, dass wenigstens eine Triggereinheit, bevorzugt jede Triggereinheit mit einer zentralen Kommunikationseinheit ein Weitbereichsnetzwerk ausbildet, insbesondere innerhalb dieses Weitbereichsnetzwerkes über Mobilfunk kommuniziert, wobei mittels dieser zentralen Kommunikationseinheit ein insbesondere gerastertes Koordinatensystem definiert wird und in dem Koordinatensystem Ortspositionen insbesondere Rastereinheiten bestimmt werden, in denen ein Signal insbesondere zu einer vorbestimmten Zeit stimuliert werden soll, wobei durch die zentrale Kommunikationseinheit wenigstens ein Kommunikationstelegramm an wenigstens eine Triggereinheit über das Weitbereichsnetzwerk ausgesendet wird mit Informationen über diejenige wenigstens eine Ortsposition und/oder wenigstens eine Rastereinheit, deren zugeordnete wenigstens eine Empfängereinheit ein Signal erzeugen soll und von der wenigstens einen empfangenen Triggereinheit wenigstens eine Nachricht im Nahbereichsnetzwerk an zumindest diejenigen Empfängereinheiten gesendet wird, deren Ortsposition und/oder zugeordnete Rastereinheit einer in der über das Weitbereichskommunikationsnetzwerk Nachricht gespeicherten Ortsposition/Rastereinheit entspricht.

So kann es nach dieser Ausführung demnach vorgesehen sein, dass mittels einer zentralen Kommunikationseinheit ein einziges Kommunikationstelegramm versendet wird, in welchem die Ortsposition bzw. Rastereinheit all derjenigen Empfängereinheiten im Koordinatensystem um eine empfangene Triggereinheit angegeben sind, die zu einer bestimmten Zeit ein Signal, insbesondere Lichtsignal erzeugen sollen, wobei jedoch dann in einer möglichen Ausführung die Triggereinheit ein solches empfangenes Kommunikationstelegramm zunächst analysiert und zur Signalstimulierung auffordernde Telekommunikationstelegramme im Nahbereichsnetzwerk nur an solche Empfängereinheiten versendet, die durch den Inhalt des über das Weitbereichstelekommunikationsnetzwerk empfangenen Kommunikationstelegramms und der darin genannten Ortspositionen bzw. Rastereinheiten identifiziert sind.

So kann im Nahbereichsnetzwerk das Kommunikationsaufkommen vergleichsweise gering gehalten werden, da Telegramme nur an solche Empfängereinheiten versandt werden, die zu einer bestimmten Zeit zur Abgabe eines Signals, insbesondere einer Lichterscheinung aufzufordern sind.

Eine andere Ausführung kann es hier auch vorsehen, dass durch eine Triggereinheit nach Empfang eines Kommunikationstelegrammes mit den einzelnen Ortspositionen bzw. den Angaben der Rastereinheiten in denen Signale erzeugt werden sollen im Wesentlichen eine Weiterleitung dieses Signals an alle Empfängereinheiten erfolgt im Sinne eines auch als Broadcasting zu bezeichnenden Versendeschrittes, wonach sodann alle Empfängereinheiten innerhalb des Nahbereichsnetzwerkes um die Triggereinheit diese Nachricht empfangen und für sich selbst eine Analyse dahingehend vornehmen, ob die jeweils empfangene Empfängereinheit durch den Inhalt der Nachricht d.h. der darin gespeicherten Ortspositionen bzw. angegebenen Rastereinheiten aufgefordert ist, ein Signal insbesondere eine Lichterscheinung auszugeben.

Hierfür kann eine jeweils empfangene Empfängereinheit einen Vergleich durchführen mit der in ihr gespeicherten eigenen Ortsposition bzw. der Angabe der eigene Rastereinheit, welcher die Empfängereinheit zugeordnet ist mit der Liste aller Ortspositionen bzw. Rastereinheiten in der empfangenen Nachricht. Bei einer Übereinstimmung wird die Empfängereinheit ein Signal ausgeben, ansonsten nicht.

Zwar wird hierdurch das Kommunikationsaufkommen im Nahbereichsnetzwerk vergrößert, es kann jedoch hierdurch bewirkt werden, dass eine Triggereinheit mit einem einzigen Sendeschritt die entsprechende Information an alle Empfangseinheiten weiterleiten kann, wohingegen bei der vorherigen Ausführungsform die einzelnen Empfängereinheiten in aufeinander folgenden Sendeschritten durch das Aussenden von Kommunikationstelegrammen seitens einer Triggereinheit informiert werden müssen.

Insbesondere sofern sich nicht alle Empfängereinheiten in einer Empfangsreichweite um eine Triggereinheit befinden, kann auch eine Nachrichtenweiterleitung von einer empfangenden Empfängereinheit zu einer nächsten vorgesehen sein.

Bei der Generierung eines Koordinatensystems in der zentralen Kommunikationseinheit und/oder um wenigstens eine Triggereinheit herum kann es bevorzugt vorgesehen sein, dass dieses jeweilige Koordinatensystem in seiner räumlichen Ausdehnung beschränkt ist, also ein beschränkter Koordinatenraum ausgebildet wird, im welchen lediglich die Visualisierung erfolgen soll. Es kann also vorgesehen sein, dass sich Empfängereinheiten um eine Triggereinheit herum befinden, die bereits ein Nahbereichsnetzwerk ausbilden, weil sie im Empfangsbereich liegen und auch mit der oder den Triggereinheiten kommunizieren, insbesondere zum Zweck der Ortbestimmung, aber erst an der Visualisierung teilnehmen, wenn die Empfängereinheiten sich hinsichtlich der jeweiligen Koordinaten innerhalb des beschränkten Raumes befinden, sich also die Koordinaten hinsichtlich der Koordinaten-Achsrichtungen unterhalb eines jeweiligen Maximalwertes befinden.

Besonders bei der Anforderung mit einer Vielzahl von Empfängereinheiten eine konkrete grafische Gestaltung wie z.B. ein Logo, ein Wort oder ähnliches in einer Menge von Menschen darstellen zu können, besteht die Notwendigkeit, dass die einzelnen Empfängereinheiten die jeweilige Einzelinformation der Gesamtdarstellung, die durch die jeweilige Empfängereinheit repräsentiert wird alle gemeinsam gleichzeitig darstellen.

Hierfür kann es vorgesehen sein, dass im Kommunikationstelegramm welches über das Weitbereichskommunikationsnetzwerk versendet wird der wenigstens einen Ortsposition bzw. der wenigstens einen Rastereinheit eine Zeitinformation zugeordnet ist über den Zeitpunkt, wann ein Signal von einer Empfängereinheit auszugeben ist und die Empfängereinheiten untereinander zeitlich synchronisiert sind, insbesondere durch eine jeweilige interne Uhr, die mit einer für alle Empfängereinheiten gemeinsamen Synchronisationsquelle synchronisiert wird, beispielsweise mit einem NTP Server.

Hier kann es demnach die Erfindung vorsehen, dass nach Empfang des Telekommunikationstelegramms über das Weitbereichskommunikationsnetzwerk mittels der Triggereinheit diese Triggereinheit die zu der wenigstens einen Ortsposition bzw. Rastereinheit empfangene Zeitinformation an die jeweiligen Empfängereinheiten weiterleitet, beispielsweise in Übereinstimmung mit den vorigen Ausführungen in Verbindung mit einem einzigen als Broadcast ausgestrahlten Telekommunikationstelegramm für alle Empfängereinheiten oder aber auch in einzelnen für jede Empfängereinheit individuell ausgesendeten Kommunikationstelegrammen.

Eine bevorzugte Ausführung des erfindungsgemäßen Verfahrens sieht es vor, dass das Nahbereichsnetzwerk zwischen der wenigstens einen Triggereinheit und dem in der Gruppe zugeordneten Empfängereinheiten als Bluetooth - Netzwerk ausgebildet ist. Es kann demnach innerhalb dieses Netzwerkes eine Kommunikation gemäß Bluetooth Protokoll erfolgen, beispielsweise gemäß dem low energy Bluetooth Standard, der hohe Reichweiten trotz geringer Energieanforderungen ermöglicht.

Da es innerhalb des Bluetooth Standard bzw. Protokolls vorgesehen ist, dass nur eine begrenzte Anzahl von Einheiten innerhalb eines solchen Nahbereichskommunikationsnetzwerkes miteinander kommunizieren kann, kann es die Erfindung vorsehen, dass in einem Zeitschlitzverfahren, d.h. in aufeinander folgenden Zeitschlitzen eine jeweils andere Gruppe von Empfängereinheiten der jeweiligen Triggereinheit zugeordnet wird, um signalstimulierende Kommunikationstelegramme zu empfangen.

Hierbei kann es vorgesehen sein, dass eine Gesamtgruppe von Empfängereinheiten, welche die nach dem Bluetooth Standard zulässige Gesamtanzahl überschreitet in mehrere Untergruppen eingeteilt wird und demnach zeitlich nacheinander jeweils eine Untergruppe in das Nahbereichskommunikationsnetzwerk mit einer Triggereinheit eingebunden wird, anschließend nach Ausführen der Kommunikationen diese Untergruppe deselektiert und eine neue Untergruppe im nächsten Zeitschlitz wiederum eingebunden wird und so fort, bis dass an alle Empfängereinheiten die Kommunikationstelegramme versendet sind.

Statt einer Neueinbindung einer insgesamt neuen Untergruppe in das Nahbereichsnetzwerk einer Triggereinheit kann es auch vorgesehen sein, das Nahbereichsnetzwerk mit der maximalen Anzahl zulässiger Kommunikationsteilnehmer zu betreiben und in aufeinanderfolgenden Zeitschlitzen jeweils immer nur eine der Empfängereinheiten der aktuellen Untergruppe zu deaktivieren und in dem darauffolgenden Zeitschlitz eine andere Empfängereinheit in das Nahbereichsnetzwerk sodann aufzunehmen.

Im Rahmen einer Bluetooth-Kommunikation kann es weiterhin vorgesehen sein, den Datenaustausch, insbesondere das Versenden der signalstimulierenden Kommunikationstelegramme und/oder die Kommunikation zur Ortsbestimmung auf dem "Advertising-Kanal" durchzuführen, insbesondere der trotz Beschränkung der Nutzdaten eine genügende Anzahl von Bytes zur Verfügung stellt.

Die Erfindung kann auch vorsehen in einem Bereich, der insgesamt mit einer Anzahl von Empfängereinheiten abgedeckt werden soll, die nicht alle von ein und derselben Triggereinheit Kommunikationstelegramme erhalten können, sei es aus Protokolltechnischen Gründen oder wegen mangelnder Reichweite, dass mehrere Triggereinheiten in diesem Bereich vorgesehen sind, die jeweils ihre Kommunikationstelegramme an die eigene Gruppe von Empfängereinheiten senden, diese mehreren Gruppen jedoch örtlich aneinander angrenzen. In einem solchen Fall kann eine zentrale Kommunikationseinheit über das Weitbereichsnetzwerk an alle diese Triggereinheiten jeweils eine Kommunikationsnachricht senden oder auch nur an eine, welche sodann diese Nachricht oder zumindest deren Inhalt an die anderen Triggereinheiten weiterleitet. So kann zwischen den Triggereinheiten ein Netzwerk realisiert sein, das eine höhere Reichweite hat als die Netzwerke zwischen Triggereinheit und den Empfängereinheiten von deren Gruppe. Dieses Netzwerk kann bevorzugt ein funkbasiertes sein, aber auch ein Kabelnetzwerk.

Wie im Stand der Technik, kann es das erfindungsgemäße Verfahren vorsehen, dass als Empfängereinheiten beispielsweise Kommunikationsgeräte zum Einsatz kommen, welche die Personen einer Menschenmenge ohnehin mit sich führen, wie beispielsweise Mobiltelefone. Gerade auch deshalb, weil Mobiltelefone üblicherweise auch den Bluetooth-Standard beherrschen, kann auch eine Kommunikation in einem nach diesem Standard aufgebauten Nahbereichskommunikationsnetzwerk stattfinden.

Die Erfindung kann es jedoch in einer Alternative ebenso vorsehen, dass Empfängereinheiten zum Einsatz kommen, die ausschließlich zum Zwecke der Durchführung des erfindungsgemäßen Verfahrens hergestellt sind und beispielsweise mittels einer Befestigungsvorrichtung an Kleidungsstücken von Personen befestigt werden können und wenigstens eine zu Lichtemission stimulierbare Anzeigeeinheit umfassen, insbesondere wenigstens eine LED.

Hierbei kann eine solche zur Lichtemission stimulierbare Anzeigeeinheit direkt in einer Empfängereinheit vorgesehen sein oder aber auch über eine Schnittstelle an eine solche Empfängereinheit angekoppelt sein. So besteht hierdurch auch die Möglichkeit, die zur Lichtemission stimulierbare Anzeigeeinheit örtlich getrennt von der Empfängereinheit an einer Person beziehungsweise der Kleidung dieser Person anzuordnen.

Ein erfindungsgemäßes System zur Durchführung des Verfahrens umfasst in bevorzugter Ausführung wenigstens eine Triggereinheit, bevorzugt wenigstens drei Triggereinheiten, wobei wenigstens eine der Triggereinheiten eine Empfangsvorrichtung aufweist zum Empfang von Kommunikationstelegrammen über ein Weitbereichsnetzwerk, insbesondere über Mobilfunk.

Weiterhin umfasst ein solches System eine Anzahl mehrerer Empfängereinheiten mit einer Signalisierungseinheit, wie beispielsweise und bevorzugt eine Lichterzeugungseinheit. Die wenigstens eine Triggereinheit und die mehreren Empfängereinheiten eines solchen Systems sind eingerichtet, ein Nahbereichskommunikationsnetzwerk auszubilden, insbesondere ein solches nach dem Bluetooth-Standard, wobei die wenigstens eine Triggereinheit eingerichtet ist, an die Empfängereinheiten Kommunikationstelegramme über das Nahbereichsnetzwerk zu versenden und mit den Kommunikationstelegrammen in Abhängigkeit von Ortsinformationen, welche über das Weitbereichsnetzwerk empfangbar sind, die Empfängereinheiten zur Erzeugung von Signalen, insbesondere Lichtsignalen aufzufordern, wobei sich das erfindungsgemäße System besonders dadurch auszeichnet, dass die wenigstens eine Triggereinheit und die mehreren Empfängereinheiten weiterhin eingerichtet sind durch Kommunikation untereinander die Ortsposition jeder Empfängereinheit relativ zu wenigstens einer Triggereinheit zu bestimmen.

Sofern in einem solchen System identische Geräte als Triggereinheit und Empfängereinheit vorhanden sind, welche in der jeweiligen Funktionalität einstellbar sind, ist es vorgesehen, dass von allen Geräten wenigstens drei solcher Geräte vorhanden sind, damit zumindest diese Geräte zumindest zeitweise die Funktion einer Triggereinheit zum Zweck der Ortsbestimmung wahrnehmen können.

Beispielsweise kann es hier vorgesehen sein, dass ein solches erfindungsgemäßes System, das nicht zwingend auch die bereits zuvor beschriebene zentrale Kommunikationseinheit umfassen muss, eine kommerziell handelbare Einheit darstellt, beispielsweise also bei Fußballspielen an Fangruppen ausgegeben oder verkauft werden kann. Jede Fangruppe, innerhalb der sodann die Empfängereinheiten und Triggereinheiten verteilt werden, kann ein Nahbereichsnetzwerk ausbilden und über das Weitbereichsnetzwerk, wie beispielsweise eine Mobilfunkverbindung von einer zentralen Kommunikationseinheit angesteuert werden, um Signalisierungen insbesondere Lichteffekte zu erzeugen. Hierfür können die Triggereinheiten Mobilfunk-SIM-Karten umfassen oder mit diesen nachgerüstet werden.

Es besteht hierdurch die Möglichkeit mittels einer zentralen Kommunikationseinheit dieselben programmierten Lichteffekte in verschiedenen, auch örtlich vollständig getrennten und nicht aneinander angrenzenden Menschenmengen zu erzeugen, da diese verschiedenen Menschenmengen alle über das Weitbereichsnetzwerk und die darin eingebundenen Triggereinheiten dieselben Kommunikationstelegramme beziehungsweise zumindest die gleichen Inhalte in gegebenenfalls nacheinander versendeten Telegrammen empfangen können, um so zeitgleich oder zumindest aneinander synchronisiert dieselben Lichteffekte zu erzeugen.

So können beispielsweise dieselben Lichteffekte in einer Fankurve in einem Stadion, ebenso wie in einer Menschenmenge beim Public-Viewing oder in einer Kneipe beziehungsweise Sportbar erzeugt werden, wobei die Organisation und die Art der Lichterzeugung zentral verwaltet wird durch die zentrale Kommunikationseinheit und die mit dieser in dem Koordinatensystem definierten Lichterscheinungen.

Hierfür weist bevorzugt das in der zentralen Kommunikationseinheit definierte, gerasterte Koordinatensystem dieselbe Rasterung und bevorzugt dieselbe örtliche Ausdehnung auf, wie das um eine Triggereinheit logisch aufgespannte Koordinatensystem.

Das erfindungsgemäße System kann es hier beispielsweise vorsehen, dass mit Einschalten der Triggereinheiten und der Empfangsvorrichtungen eine automatische Positionsbestimmung durchgeführt wird, um das Koordinatensystem um die wenigstens eine Triggereinheit herum zu bilden, die Positionen zu bestimmen und sodann für den Empfang von Telekommunikationsnachrichten zur Stimulierung von Lichteffekten bereit zu sein.

Um eine Ortsbestimmung innerhalb des Nahbereichsnetzwerkes um eine Triggereinheit herum vorzunehmen, kann es vorgesehen sein, dass lediglich die Notwendigkeit besteht, mehrere, bevorzugt mindestens drei Triggereinheiten in einer vorgegebenen Geometrie zueinander anzuordnen, so dass aufgrund dieser gewählten Geometrie die relative Lage, insbesondere die Abstände der wenigstens drei Triggereinheiten zueinander bekannt ist und demnach wenigstens eine der Triggereinheiten einen Koordinatenursprung ausbilden kann und sodann durch eines der vorgenannten Triangulationsprinzipien oder auch andere Methode jede einzelne Empfängereinheit innerhalb des Empfangsbereiches des Nahbereichskommunikationsnetzwerkes hinsichtlich seiner Position in dem Koordinatensystem bestimmt werden kann. Beispielsweise kann es hier vorgesehen sein, dass drei Triggereinheiten in der Konfiguration eines gleichschenkligen Dreieckes zueinander angeordnet werden, wofür ein bestimmter Abstand dieser drei Triggereinheiten, demnach also eine bestimmte Schenkellänge des gleichschenkligen Dreieckes einzuhalten ist. Wird eine solche Konfiguration bei den Triggereinheiten gebildet, so ist die relative Lage der Triggereinheiten zueinander im erfindungsgemäßen System bekannt und es kann sodann aufgrund der Triangulationsprinzipien die Ortsbestimmung der einzelnen Empfängereinheiten, die mit den wenigstens drei Triggereinheiten im Nahbereichsnetzwerk zumindest zu diesem Zweck kommunizieren, erfolgen.

Geräte bzw. Einheiten mit beiden Funktionalitäten (Trigger- und Empfängerfunktionalität) können z.B. nach einer durchgeführten Ortsbestimmung - insbesondere sofern diese nicht wiederholend durchgeführt wird - von der Triggerfunktionalität in die Empfängerfunktionalität automatisch oder auf Anforderung wechseln.

Eine Ausführung des Verfahrens und des Systems kann es auch vorsehen, dass eine Visualisierung nicht nur von einer oder auch mehreren zentralen Kommunikationseinheit ausgelöst werden kann durch Aussenden von auslösenden Nachrichten über das Weitbereichsnetzwerk, sondern auch durch Triggereinheiten und/oder Empfängereinheiten innerhalb des Nahbereichsnetzwerkes.

Z.B. kann eine Auslösung durch einen Tastendruck oder sonstige Auslösemaßnahme an einer solchen Einheit generiert werden. Beispielsweise können dafür in einer Einheit abrufbare Visualisierungen (statische oder bewegter Bilder / Bildfolgen, Muster etc) gespeichert sein und die auslösende Einheit für das benötigte stimulierende Kommunikationstelegramm selbst Triggerfunktion übernehmen oder durch Kommunikation eine Triggereinheit im Nahbereichsnetzwerk auffordern, wenigstens ein stimulierendes Kommunikationstelegramm für die gewählte Visualisierung zu versenden.

Eine solche nicht zentral, sondern lokal in einem Nahbereichsnetzwerk ausgelöste Visualisierung kann z.B. nur auf das Nahbereichsnetzwerk angewendet werden, in welchem die Auslösung erfolgte.

Hier kann es auch vorgesehen sein, eine solche Nachricht auch über das Weitbereichsnetzwerk an andere örtlich entfernte Triggereinheiten zu versenden, z.B. durch die Triggereinheit, die daran angeschlossen ist. Im Sinne der Erfindung kann hierdurch auch eine Triggereinheit und/oder Empfängereinheit zumindest zeitweise die Funktion einer zuvor beschriebenen zentralen Kommunikationseinheit wahrnehmen, zumindest für eine begrenzte Anzahl in der Einheit gespeicherter Visualisierungsmuster.

Es kann vorgesehen sein, durch Anschluß einer Empfängereinheit und/oder Triggereinheit eines solchen Systems an einen Computer / Server in dieser Kombination eine zentrale Kommunikationseinheit auszubilden, gemäß vorheriger Beschreibung, insbesondere in der also frei programmierbar Visualisierungen im Koordinatensystem / Koordinatenraum erstellbar sind und über ein Nahbereichsnetzwerk oder bevorzugt sogar über ein Weitbereichsnetzwerk an andere Triggereinheiten als stimulierende Kommunikationstelegramme zu versenden um durch die empfangenden Trigger- und Empfängereinheiten die programmierte Visualisierung ausführen zu lassen.

Eine Ausführungsform der Erfindung wird anhand der nachfolgenden Figuren näher beschrieben.

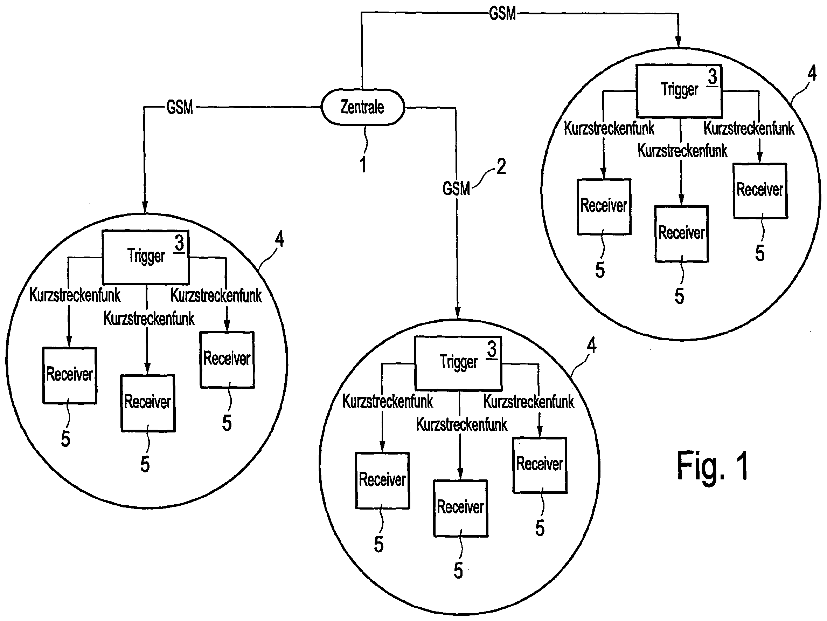

Die Figur 1 zeigt die schematische Darstellung mehrerer erfindungsgemäßer Systeme zur Durchführung des vorbeschriebenen Verfahrens, bei welchem zusätzlich eine zentrale Kommunikationseinheit 1 vorgesehen ist, um hier über ein Mobilfunknetzwerk nach dem GSM-Standard 2 mit mehreren Triggereinheiten 3 kommunizieren zu können. Jede Triggereinheit 3 kann hier ein Nahbereichsnetzwerk 4, mit einer begrenzten Reichweite kleiner 100m um sich herum aufspannen, in welchem Empfängereinheiten 5 mit der Triggereinheit 3 kommunizieren können, zumindest unidirektional, d.h. die Empfängereinheiten empfangen Kommunikationstelegramme von der Triggereinheit 3.

Es besteht so die Möglichkeit durch eine zentrale Kommunikationseinheit 1 ein Koordinatensystem zu definieren, in welchem weiterhin definiert wird, an welchen Ortspositionen beziehungsweise in welchen Rastereinheiten eines solchen Koordinatensystems Signalisierungen, insbesondere Lichterscheinungen, an den entfernten Orten der jeweiligen Triggereinheiten 3 stattfinden sollen. Durch die in mehreren Rastereinheiten bzw. Positionen programmierte Lichterscheinung kann ein Bild oder Text oder ähnliches erzeugt werden.

Kommunikationstelegramme mit Informationen über die Rastereinheiten bzw, Orte mit Lichterscheinungen können über das Weitbereichsnetzwerk 2 an die Triggereinheiten übermittelt werden, die sodann diese Informationen gemäß der vorangegangenen Beschreibung an die Empfängereinheiten 5 weiterverteilen, um diese zur Signalerzeugung zu stimulieren. Allgemein können die Information neben dem Status AN oder AUS auch eine Farbe der Lichterscheinung umfassen.

Erfindungsgemäß ist es wesentlich, dass die einzelnen Empfängereinheiten hinsichtlich ihrer individuellen Ortsposition innerhalb des Nahbereichsnetzwerkes definiert beziehungsweise bekannt sind. Gemäß vorangegangener Beschreibung kann dies beispielsweise durch Triangulation erfolgen, innerhalb der jeweiligen Nahbereichsnetzwerke 4, ohne auf externe Komponenten Rückgriff nehmen zu müssen.

Zwar zeigt die hier wiedergegebene Figur 1 in den einzelnen Nahbereichsnetzwerken 4 jeweils nur eine Triggereinheit 3, es kann jedoch zumindest zum Zwecke der Triangulation vorgesehen sein, dass wenigstens drei Triggereinheiten vorgesehen sind, deren relative Position zueinander bekannt ist, um sodann durch die Triangulation gemäß der beschriebenen Mechanismen die Ortsbestimmung vorzunehmen. Demnach kann es hier vorgesehen sein, dass zwar innerhalb eines Nahbereichsnetzwerkes zum Zwecke der Ortsbestimmung mehrere Triggereinheiten vorhanden sind, der Empfang von die Signalisierung definierenden Kommunikationstelegrammen über das Weitbereichsnetzwerk 2 jedoch nur über eine dieser Triggereinheiten erfolgt, so wie es dargestellt ist.

Wie eingangs beschrieben, sieht zumindest der Bluetooth-Standard, der im Nahbereichsnetzwerk Verwendung finden kann vor, dass nur eine begrenzte Anzahl von Empfängereinheiten mit einer Triggereinheit ein solches Nahbereichsnetzwerk ausbilden kann, eine sogenannte Picozelle. Um für die Organisation von Lichteffekten oder auch sonstigen Signalisierungen eine darüber hinausgehende Anzahl von Empfängereinheiten 5 nutzen zu können, kann es die Erfindung auch vorsehen, innerhalb ein und des selben Koordinatensystems, das heißt logisch hinsichtlich des Ortes gemeinsam organisiert, mehrere Nahbereichskommunikationsnetzwerke zu bilden, in denen jeweils eine Anzahl von Empfängereinheiten mit einer Triggereinheit kommuniziert, wobei diese Anzahl bevorzugt der Maximalanzahl möglicher Teilnehmer innerhalb des Netzwerkes entspricht.

Sofern nur eine Triggereinheit zum Empfang von Weitbereichstelegrammen vorgesehen ist, kann gemäß der Erfindung eine Weiterleitung der empfangenen Information bezüglich der durchzuführenden Lichteffekte zwischen den einzelnen Triggereinheiten 3 stattfinden oder die Erfindung sieht es vor, dass jede Triggereinheit 3 zum Empfang von Weitbereichstelegrammen eingerichtet ist.

Organisatorisch kann es sodann vorgesehen sein, dass jeder Triggereinheit 3, die ein Nahbereichsnetzwerk 4 um sich herum aufspannt, einen örtlichen Teilbereich von aneinander angrenzenden Teilbereichen des gesamten Koordinatensystems abdeckt.

Die Figur 2 visualisiert im Wesentlichen eine solche Anordnung. Hier ist es erkennbar, dass in einer großen Menschenmenge eine Vielzahl von Triggereinheiten 3 insbesondere ortfest verteilt ist, um die herum Empfängereinheiten 5 angeordnet sind.

Die Figur 3 zeigt eine mögliche Organisation der Kommunikation zwischen diesen verschiedenen Einheiten. Jeder Triggereinheit 3 kann eine bestimmte Anzahl von Empfängereinheiten 5 zugeordnet sein, wobei die Erfindung auch grundsätzlich vorsehen kann, dass diese Anzahl größer ist, als die beispielsweise nach dem Bluetooth-Standard zulässige Anzahl.

Sodann sieht es die Erfindung bezüglich jeder einzelnen Triggereinheit 3 vor, dass in aufeinanderfolgenden Zeitschlitzen eine Triggereinheit 3 eine Kommunikation jeweils mit einer begrenzten Anzahl, das heißt einer Untergruppe der Gesamtgruppe von Empfängereinheiten vornimmt, um die signalstimulierenden Informationen beziehungsweise die diesbezüglichen Kommunikationstelegramme an die Empfängereinheiten zu versenden.

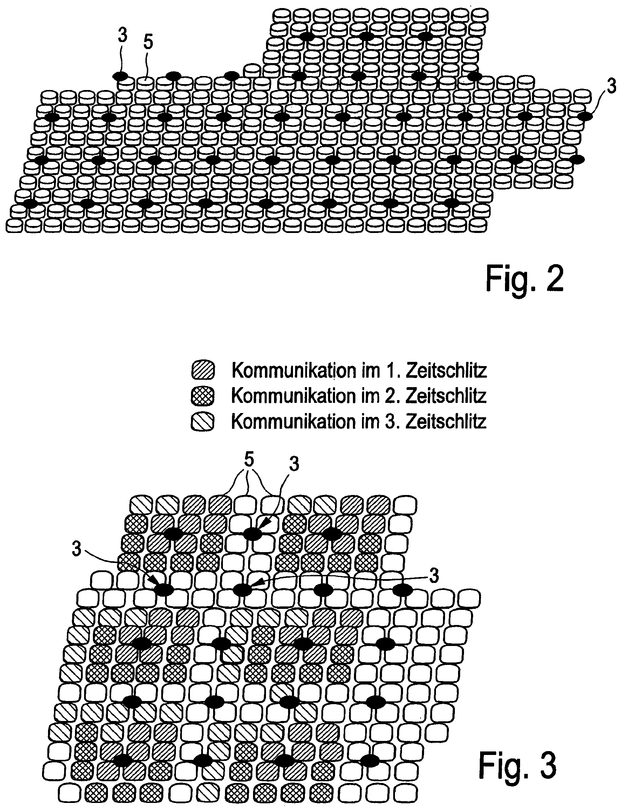

Die Figur 3 visualisiert, dass die unterschiedlich schraffiert dargestellten Empfängereinheiten zwar alle einer bestimmten Triggereinheit zugeordnet sind, jedoch gemäß Schraffierung in aufeinanderfolgenden Zeitschlitzen ihre Telekommunikationsnachrichten empfangen, um aus diesen die benötigten Informationen über eine durchzuführende Signalisierung, insbesondere eine Lichterscheinung zu erhalten.

Es kann so eine grundsätzlich beliebig große Menge von Empfängereinheiten organisatorisch zusammengefasst werden, um eine Lichtszene mit hoher Auflösung, beispielsweise in einem Stadion, über die Vielzahl der dort anwesenden Personen zu erzeugen.

Da die einzelnen Telekommunikationstelegramme in jeweils gebildeten zeitschlitzbezogenen Untergruppen nacheinander versendet werden müssen, besteht hier die Notwendigkeit, mit den einzelnen Telekommunikationstelegrammen Zeitinformationen zu versenden, aus denen sich ergibt, wann eine Empfängereinheit in Abhängigkeit ihrer Ortsposition eine Lichterscheinung auszugeben hat.

Es sind demnach alle Empfängereinheiten zeitlich untereinander synchronisiert, beispielsweise dadurch, dass jede Empfängereinheit eine interne Uhr aufweist und alle internen Uhren der Empfängereinheiten an eine gemeinsame zeitgebende Quelle, zum Beispiel ein NTB-Server synchronisiert sind. In einem Telegramm des Nahbereichsnetzwerkes und des Weitbereichnetzwerkes wird also nicht nur die Information versendet, welche Empfängereinheit ein Signal auszugeben hat, sondern auch wann das erfolgen soll.

## Patentansprüche

1. Verfahren zur Ausgabe von stimulierten Signalen, insbesondere Lichtsignalen mittels insbesondere mobiler Empfängereinheiten (5), die jeweils zur Ausgabe von stimulierten Signalen in Abhängigkeit einer empfangenen Nachricht eingerichtet sind, wobei wenigstens einer Triggereinheit (3) eine Gruppe von mehreren Empfängereinheiten (5) zugeordnet wird, die mit der wenigstens einen Triggereinheit (3) ein Kommunikationsnetzwerk (4) bilden und von der wenigstens einen Triggereinheit (3) Nachrichten an die Empfängereinheiten (5) der zugeordneten Gruppe ausgesendet werden, mit denen die Ausgabe von Signalen bei den jeweiligen die Nachricht empfangenden Empfängereinheiten (5) in Abhängigkeit der Positionen der jeweiligen Empfängereinheiten (5) stimuliert wird, **dadurch gekennzeichnet, dass** die wenigstens eine Triggereinheit (3) mit der Gruppe der mehreren zugeordneten Empfängereinheiten (5) ein Nahbereichs-Kommunikationsnetzwerk (4) bildet, insbesondere mit einer Reichweite kleiner 1000m, bevorzugt kleiner 100m und durch Kommunikationen zwischen den Einheiten (3,5) dieses Nahbereichsnetzwerkes (4), durch Kommunikationen zwischen Empfängereinheiten (5) und wenigstens einer Triggereinheit (3) und/oder zwischen mehreren Empfängereinheiten (5) die jeweilige örtliche Position der Empfängereinheiten (5) der Gruppe relativ zu wenigstens einer Triggereinheit (3) ermittelt wird, wobei um wenigstens eine Triggereinheit herum ein Koordinatensystem generiert wird, in welchem lediglich in einem beschränkten Koordinatenraum eine Visualisierung erfolgt, wofür im Empfangsbereich einer Triggereinheit befindliche und ein Nahbereichsnetzwerk ausbildende Empfangseinheiten, die mit der Triggereinheit zum Zwecke der Ortsbestimmung kommunizieren, erst dann automatisch an der Visualisierung teilnehmen, wenn diese sich innerhalb des beschränkten Koordinatenraumes befinden.

2. Verfahren nach Anspruch 1, **dadurch gekennzeichnet, dass** die Position einer jeweiligen Empfängereinheit (5) bestimmt wird durch Kommunikationen, bei denen wenigstens einer der folgenden Schritte durchgeführt wird:
a. Die jeweiligen Empfängereinheiten (5) bestimmen die Empfangsfeldstärke von wenigstens drei Funksignalen, insbesondere wenigstens drei Kommunikationstelegrammen, die sie von wenigstens drei verschiedenen Einheiten (3,5) erhalten haben, insbesondere von Triggereinheiten (3) oder anderen Empfängereinheiten (5) mit Sendefähigkeit, wobei zumindest die relative Position der drei verschiedenen Einheiten (3,5) zueinander bekannt ist und wobei durch Triangulation anhand der wenigstens drei Empfangsfeldstärkewerte die Position einer jeweiligen Empfängereinheit (5) relativ zu wenigstens einer der Einheiten (3,5), insbesondere zu einer Triggereinheit (3) bestimmt wird.
b. die Laufzeit, insbesondere Hin- und Rücklaufzeit eines Funksignals, insbesondere eines Kommunikationstelegramms zwischen einer jeweiligen Empfängereinheit (5) und wenigstens drei verschiedenen Einheiten (3,5), insbesondere wenigstens drei verschiedenen Triggereinheiten (3) wird bestimmt, wobei zumindest die relative Position der drei verschiedenen Einheiten (3,5) zueinander bekannt ist und durch Triangulation anhand der wenigstens drei Laufzeitwerte die Position einer jeweiligen Empfängereinheit (5) relativ zu wenigstens einer der verschiedenen Einheiten (3,5) bestimmt wird.
c. Alle Empfängereinheiten (5) versenden, insbesondere periodisch Funksignale, insbesondere Kommunikationstelegramme, insbesondere mit gleicher Sendeleistung und mittels wenigstens drei verschiedenen Einheiten (3,5), insbesondere Triggereinheiten (3), wobei zumindest die relative Position der drei verschiedenen Einheiten (3,5) zueinander bekannt ist, werden die Empfangsfeldstärken dieser Funksignale ermittelt und durch Triangulation anhand der wenigstens drei Empfangsfeldstärkewerte die Position einer jeweiligen Empfängereinheit (5) relativ zu wenigstens einer der verschiedenen Einheiten (3,5) bestimmt wird.

3. Verfahren nach Anspruch 1 oder 2, **dadurch gekennzeichnet, dass** eine relativ zu einer der verschiedenen Einheiten (3,5) bestimmte Ortsposition einer jeweiligen Empfängereinheit (5) einer Rastereinheit zugeordnet wird von einem in ein Raster unterteilten Koordinatensystem, insbesondere von einem in wenigstens zwei Dimensionen gerasterten Koordinatensystem.

4. Verfahren nach einem der vorherigen Ansprüche 2 oder 3, **dadurch gekennzeichnet, dass** die Positionsbestimmung in zeitlichen Abständen wiederholt durchgeführt wird.

5. Verfahren nach einem der vorherigen Ansprüche, **dadurch gekennzeichnet, dass** wenigstens eine Triggereinheit (3), bevorzugt jede Triggereinheit (3) mit einer zentralen Kommunikationseinheit (1) ein Weitbereichsnetzwerk (2) ausbildet, insbesondere über Mobilfunk kommuniziert, wobei mittels der zentralen Kommunikationseinheit (1) ein insbesondere gerastertes Koordinatensystem definiert wird und in dem Koordinatensystem Ortspositionen insbesondere Rastereinheiten bestimmt werden, in denen ein Signal insbesondere zu einer vorbestimmten Zeit stimuliert werden soll und durch die zentrale Kommunikationseinheit (1) wenigstens ein Kommunikationstelegramm an wenigstens eine Triggereinheit (3) über das Weitbereichsnetzwerk (2) ausgesendet wird mit Informationen über diejenige wenigstens eine Ortsposition und/oder wenigstens eine Rastereinheit deren zugeordnete Empfängereinheit(en) (5) ein Signal erzeugen soll(en) und von der wenigstens einen empfangenden Triggereinheit (3) wenigstens eine Nachricht im Nahbereichsnetzwerk (4) an zumindest diejenigen Empfängereinheiten (5) gesendet wird, deren Ortsposition und/oder zugeordnete Rastereinheit einer in der über das Weitbereichskommunikationsnetzwerk (2) empfangenen Nachricht gespeicherten Ortposition / Rastereinheit entspricht.

6. Verfahren nach Anspruch 5, **dadurch gekennzeichnet, dass** im Kommunikationstelegramm, welches über das Weitbereichskommunikationsnetzwerk (2) versendet wird, der wenigstens einen Ortsposition / wenigstens einen Rastereinheit eine Zeitinformation zugeordnet ist über den Zeitpunkt, wann ein Signal von einer Empfängereinheit (5) auszugeben ist und die Empfängereinheiten (5) untereinander zeitlich synchronisiert sind, insbesondere durch eine jeweilige interne Uhr, insbesondere die mit einer für alle Empfängereinheiten (5) gemeinsamen Synchronisationsquelle synchronisiert wird.

7. Verfahren nach einem der vorherigen Ansprüche, **dadurch gekennzeichnet, dass** das Nahbereichsnetzwerk (4) zwischen der wenigstens einen Triggereinheit (3) und den in der Gruppe zugeordneten Empfängereinheiten (5) als Bluetooth-Netzwerk ausgebildet ist, insbesondere die Kommunikation gemäß Bluetooth-Protokoll erfolgt, insbesondere wobei die Empfängereinheiten (5) einer Gruppe zeitlich nacheinander in eine Untergruppe von einer maximalen Anzahl von Empfängereinheiten (5) eingebunden werden, zu denen eine Triggereinheit (3) gleichzeitig eine Netzwerkkommunikation unterhält.

8. Verfahren nach einem der vorherigen Ansprüche, **dadurch gekennzeichnet, dass** Empfängereinheiten (5) mittels einer Befestigungsvorrichtung an Kleidungsstücken von Personen befestigt werden und wenigstens eine zu Lichtemission stimulierbare Anzeigeeinheit umfassen, insbesondere wenigstens eine LED.

9. Verfahren nach einem der vorherigen Ansprüche, **dadurch gekennzeichnet, dass** eine Triggereinheit (3) die Funktion einer Empfängereinheit (5) ausführt und/oder eine Empfängereinheit (5) die Funktion einer Triggereinheit (3) ausführt, insbesondere eine Triggereinheit (3) und eine Empfängereinheit (5) durch ein und dasselbe Gerät ausgebildet werden und das Gerät hinsichtlich seiner Funktion umgeschaltet wird.

## Claims

1. Method for outputting stimulated signals, in particular light signals, by means of in particular mobile receiver units (5) that are each configured to output stimulated signals on the basis of a received message, wherein at least one trigger unit (3) is assigned a group of multiple receiver units (5) that form a communication network (4) with the at least one trigger unit (3), and the at least one trigger unit (3) transmits messages to the receiver units (5) of the associated group that are used to stimulate the output of signals on the respective receiver units (5) receiving the message on the basis of the positions of the respective receiver units (5), **characterized in that** the at least one trigger unit (3) forms a local area communication network (4) with the group of the multiple associated receiver units (5), in particular with a range of less than 1000 m, preferably less than 100 m, and communications between the units (3,5) of this local area network (4), communications between receiver units (5) and at least one trigger unit (3) and/or between multiple receiver units (5) ascertain the respective local position of the receiver units (5) of the group relative to at least one trigger unit (3), wherein at least one trigger unit has a coordinate system generated around it in which a visualization is effected only in a limited coordinate space, for which purpose reception units that are in reception range of a trigger unit and form a local area network, and which communicate with the trigger unit for the purpose of location determination, automatically participate in the visualization only if they are within the limited coordinate space.

2. Method according to Claim 1, **characterized in that** the position of a respective receiver unit (5) is determined by communications in which at least one of the following steps is performed:
a. The respective receiver units (5) determine the reception field strength of at least three radio signals, in particular at least three communication messages that they have received from at least three different units (3,5), in particular from trigger units (3) or other receiver units (5) with the ability to send, wherein at least the relative position of the three different units (3,5) in relation to one another is known and wherein triangulation on the basis of the at least three reception field strength values determines the position of a respective receiver unit (5) relative to at least one of the units (3,5), in particular to a trigger unit (3).
b. The propagation delay, in particular the round trip time, of a radio signal, in particular of a communication message between a respective receiver unit (5) and at least three different units (3,5), in particular at least three different trigger units (3), is determined, wherein at least the relative position of the three different units (3,5) in relation to one another is known and triangulation on the basis of the at least three propagation delay values determines the position of a respective receiver unit (5) relative to at least one of the different units (3,5).
c. All receiver units (5) send, in particular periodically, radio signals, in particular communication messages, in particular at the same transmission power and by means of at least three different units (3,5), in particular trigger units (3), wherein at least the relative position of the three different units (3,5) in relation to one another is known, the reception field strengths of these radio signals are ascertained and triangulation on the basis of the at least three reception field strength values determines the position of a respective receiver unit (5) relative to at least one of the different units (3,5).

3. Method according to Claim 1 or 2, **characterized in that** a local position of a respective receiver unit (5), determined relative to one of the different units (3,5), is assigned to a grid unit by a coordinate system divided into a grid, in particular by a coordinate system based on a grid in at least two dimensions.

4. Method according to either of the preceding Claims 2 and 3, **characterized in that** the position determination is performed repeatedly at intervals of time.

5. Method according to one of the preceding claims, **characterized in that** at least one trigger unit (3), preferably each trigger unit (3), forms a wide area network (2) with a central communication unit (1), in particular communicates by mobile radio, wherein the central communication unit (1) is used to define an in particular grid-based coordinate system and local positions in the coordinate system, in particular grid units, are determined at which a signal is intended to be stimulated in particular at a predetermined time, and the central communication unit (1) transmits at least one communication message to at least one trigger unit (3) via the wide area network (2) with information about that at least one local position and/or at least one grid unit whose associated receiver unit(s) (5) is (are) intended to generate a signal, and the at least one receiving trigger unit (3) sends at least one message in the local area network (4) to at least those receiver units (5) whose local position and/or associated grid unit corresponds to a local position/grid unit stored in the message received via the wide area communication network (2).

6. Method according to Claim 5, **characterized in that** in the communication message sent via the wide area communication network (2) the at least one local position/at least one grid unit has an associated piece of time information about the time when a signal needs to be output by a receiver unit (5), and the receiver units (5) are in timing sync with one another, in particular as a result of a respective internal clock, in particular which is synchronized to a synchronization source common to all receiver units (5).

7. Method according to one of the preceding claims, **characterized in that** the local area network (4) between the at least one trigger unit (3) and the receiver units (5) associated in the group is in the form of a Bluetooth network, in particular the communication takes place according to the Bluetooth protocol, in particular wherein the receiver units (5) of a group are incorporated at successive times into a subgroup of a maximum number of receiver units (5) with which a trigger unit (3) simultaneously conducts a network communication.

8. Method according to one of the preceding claims, **characterized in that** receiver units (5) are fastened by means of a fastening apparatus to items of clothing of people and comprise at least one display unit stimulable to emit light, in particular at least one LED.

9. Method according to one of the preceding claims, **characterized in that** a trigger unit (3) performs the function of a receiver unit (5) and/or a receiver unit (5) performs the function of a trigger unit (3), in particular a trigger unit (3) and a receiver unit (5) are formed by one and the same device and the device has its function changed over.

## Revendications

1. Procédé destiné à l'émission de signaux stimulés, en particulier de signaux lumineux au moyen en particulier d'unités de réception mobiles (5), qui sont respectivement disposées pour émettre des signaux stimulés en fonction d'un message reçu, dans lequel un groupe de plusieurs unités de réception (5) est associé à au moins une unité de déclenchement (3), celles-ci formant un réseau de communication (4) avec l'au moins une unité de déclenchement (3) et des messages sont émis depuis l'au moins une unité de déclenchement (3) vers les unités de réception (5) du groupe associé, avec lesquelles l'émission de signaux est stimulée par les unités de réception (5) recevant respectivement le message en fonction des positions des unités de réception (5) respectives, **caractérisé en ce que** l'au moins une unité de déclenchement (3) forme avec le groupe de plusieurs unités de réception (5) associées un réseau local de communication (4), en particulier avec un rayon d'action inférieur à 1000 m, de préférence inférieur à 100 m et la position spatiale respective des unités de réception (5) du groupe est mesurée relativement à au moins une unité de déclenchement (3) par les communications entre les unités (3, 5) de ce réseau local (4), par les communications entre les unités de réception (5) et au moins une unité de déclenchement (3) et/ou entre plusieurs unités de réception (5), dans lequel autour d'au moins une unité de déclenchement est généré un système de coordonnées, dans lequel une visualisation s'effectue seulement dans un espace de coordonnées restreint, dans le cadre de laquelle des unités réception se trouvant dans la zone de réception d'une unité de déclenchement et formant un réseau local, qui communiquent avec l'unité de déclenchement à fins de déclenchement de la localisation, ne participent automatiquement à la visualisation que lorsque celles-ci se trouvent à l'intérieur de l'espace de coordonnées restreint.

2. Procédé selon la revendication 1, **caractérisé en ce que** la position d'une unité de réception (5) respective est déterminée par des communications, lors desquelles au moins une des étapes suivantes est effectuée :
a. Les unités de réception (5) respectives déterminent les forces de champ de réception d'au moins trois signaux radio, en particulier au moins trois télégrammes de communication, qu'elles ont reçus d'au moins trois unités (3, 5) différentes , en particulier de trois unités de déclenchement (3) ou d'autres unités de réception (5) capables d'émission, dans lequel au moins la position des trois unités différentes (3, 5) relativement l'une à l'autre est connue et dans lequel la position d'une unité de réception (5) respective relativement à au moins une des unités (3, 5), en particulier à une unité de déclenchement (3), est déterminée par triangulation à l'aide des au moins trois valeurs de force de champ de réception,
b. La période, en particulier le temps d'aller-retour d'un signal radio, en particulier d'un télégramme de communication entre une unité de réception (5) respective et au moins trois unités différentes (3,5), en particulier au moins trois unités de déclenchement différentes (3,5), est déterminée, dans lequel au moins la position des trois unités différentes (3, 5) relativement l'une à l'autre est connue et la position d'une unité de réception (5) respective relativement à au moins une des unités différentes (3, 5) est déterminée par triangulation à l'aide des au moins trois valeurs de période,
c. Toutes les unités de réception (5) envoient, en particulier des signaux radio périodiques, en particulier des télégrammes de communication, en particulier avec la même puissance d'émission et au moyen d'au moins trois unités différentes (3, 5), en particulier des unités de déclenchement (3), dans lequel au moins la position des trois unités différentes (3, 5) relativement l'une à l'autre est connue, les forces de champ de réception de ces signaux radio sont déterminées et la position d'une unité de réception (5) respective relativement à au moins une des unités différentes (3, 5) est déterminée par triangulation à l'aide des au moins trois forces de champ de réception.

3. Procédé selon la revendication 1 ou 2, **caractérisé en ce qu'**une localisation d'une unité de réception (5) respective déterminée relativement à l'une des unités différentes (3, 5) est associée à une unité de grille d'un système de coordonnées divisé en grille, en particulier d'un système de coordonnées quadrillé en au moins deux dimensions.

4. Procédé selon l'une des revendications 2 ou 3 ci-dessus, **caractérisé en ce que** la détermination de position est répétée à des intervalles de temps.

5. Procédé selon l'une des revendications ci-dessus, **caractérisé en ce qu'**au moins une unité de déclenchement (3), de préférence chaque unité de déclenchement (3) forme avec une unité de communication centrale (1) un réseau étendu (2), communique en particulier par téléphonie mobile, dans lequel un système de coordonnées en particulier quadrillé est défini au moyen de l'unité de communication centrale (1) et des localisations, en particulier des unités de grille, sont déterminées dans le système de coordonnées, dans lesquelles un signal en particulier doit être stimulé en particulier à un moment prédéterminé et au moins un télégramme de communication est envoyé à au moins une unité de déclenchement (3) à travers l'unité de communication centrale (1) par le biais du réseau étendu (2) avec des informations sur chacune des au moins une localisation et/ou au moins une unité de grille dont la ou les unités de réception (5) associées doivent transmettre un signal et au moins un message est envoyé dans le réseau local (4) depuis l'au moins une unité de déclenchement (3) réceptrice à au moins chacune des unités de réception (5), dont la localisation et/ou l'unité de grille associée correspond à une localisation / unité de grille enregistrée dans le message reçu par le biais du réseau de communication étendu (2).

6. Procédé selon la revendication 5, **caractérisé en ce que** dans le télégramme de communication qui est envoyé par le biais du réseau de communication étendu (2), une information temporelle sur le moment est associée à l'au moins une localisation / au moins une unité de grille, quand un signal est émis depuis une unité de réception (5) et les unités de réception (5) sont synchronisées temporellement l'une par rapport à l'autre, en particulier par le biais d'une horloge interne respective, qui est en particulier synchronisée avec une source de synchronisation commune à toutes les unités de réception (5).

7. Procédé selon l'une des revendications ci-dessus, **caractérisé en ce que** le réseau local (4) entre l'au moins une unité de déclenchement (3) et les unités de réception (5) associées dans le groupe est conçu comme réseau Bluetooth, en particulier que la communication s'effectue avec le protocole Bluetooth, en particulier dans lequel les unités de réception (5) d'un groupe sont intégrées temporellement l'une après l'autre dans un sous-groupe d'un nombre maximal d'unités de réception (5), avec lesquelles une unité de déclenchement (3) maintient en même temps une communication réseau.

8. Procédé selon l'une des revendications ci-dessus, **caractérisé en ce que** les unités de réception (5) sont fixées au moyen d'un dispositif de fixation sur des vêtements de personnes et comprennent au moins une unité d'affichage pouvant être stimulée pour émettre de la lumière, en particulier au moins une diode électroluminescente.

9. Procédé selon l'une des revendications ci-dessus, **caractérisé en ce qu'**une unité de déclenchement (3) effectue la fonction d'une unité de réception (5) et/ou une unité de réception (5) effectue la fonction d'une unité de déclenchement (3), en particulier une unité de déclenchement (3) et une unité de réception (5) sont formées par un seul et même appareil et cet appareil est commuté en qui concerne sa fonction.
